# EUROPÄISCHE PATENTSCHRIFT

(11) **EP 0 656 503 B1**
(45) Veröffentlichungstag und Bekanntmachung des Hinweises auf die Patenterteilung: **02.07.1997**
(21) Anmeldenummer: 94118270.1
(22) Anmeldetag: 21.11.1994
(51) Int. Cl.: F16L 55/05, E03C 1/06, A47L 17/00

(54) **Brause mit einem Handgriff und einem mittels eines Handhebels betätigbaren Absperrventil**
Showerhead with handle and lever operated stop valve
Pomme de douche avec poignée et soupape d'arrêt actionnée par levier

(30) Priorität: 03.12.1993 CH 3630/93
(43) Veröffentlichungstag der Anmeldung: 07.06.1995
(73) Patentinhaber: KWC AG, CH-5726 Unterkulm (CH)
(72) Erfinder: Brunner, Arthur, CH-8916 Jonen (CH); Maurer, Walter, CH-5726 Unterkulm (CH); Häuptli, Kurt, CH-5722 Gränichen (CH)
(74) Vertreter: Patentanwälte Schaad, Balass, Menzl & Partner AG

(56) Entgegenhaltungen:
- CH-A- 647 165
- DE-A- 3 626 337
- DE-B- 1 096 694
- US-A- 4 186 775

## Beschreibung

Die Erfindung bezieht sich auf eine Brause der im Oberbegriff des Anspruchs 1 angegebenen Art.

Eine solche, mit einem schwenkbaren Handhebel ausgerüstete Brause dient beispielsweise als Geschirr-Waschbrause in einer Gaststättenküche. Beim Niederdrücken des unter Federkraft stehenden Handhebels wird das ein- oder angebaute Absperrventil geöffnet und beim Loslassen durch Federkraft geschlossen.

Wird der Handhebel zum Schliessen des Absperrventils zu rasch losgelassen, ist mit einem Druckstoss in der Zuleitung zu rechnen, da die in Bewegung befindliche Wassersäule dabei zu rasch abgebremst wird. Durch eine damit verbundene plötzliche Druckspitze werden vom Druck beaufschlagte Leitungsteile wesentlich höher beansprucht als bei statischem Betriebsdruck. Durch eine solche Überbeanspruchung können Rohrbrüche oder andere Beschädigungen von Leitungsteilen auftreten.

Zur Verhinderung oder Reduzierung von Druckstössen ist es durch die CH-PS 647 165 bekannt, das Absperrventil der Brause auch beim raschen Loslassen des Handhebels verzögert schliessen zu lassen. Dazu dient eine am Absperrventil selbst ausgebildete Verzögerungseinrichtung, welche eine spezielle Gestaltung der Verschlussteile des Absperrventils voraussetzt und damit auch die Herstellungskosten gegenüber einer Standardausführung erhöht. Ferner kann das verzögerte Schliessen als störend empfunden werden.

Der Erfindung liegt die Aufgabe zugrunde, eine Brause der im Oberbegriff des Anspruchs 1 angegebenen Art zu schaffen, bei der das Auftreten eines Druckstosses beim raschen Loslassen des Handhebels auch ohne eine besondere Ausbildung des Absperrventils verhindert oder zumindest auf einen unkritischen Wert abgeschwächt wird.

Die gestellte Aufgabe wird erfindungsgemäss durch die im kennzeichnenden Teil des Anspruchs 1 angegebenen Merkmale gelöst.

Bei einer solchen Lösung wird der sonst zu einem Druckstoss führende Druckanstieg durch die nachgiebige Wandung aufgefangen und pufferartig ausgeglichen. Zudem ist diese Lösung sehr einfach und erfordert keine spezielle Ausbildung des Absperrventils. Die Leitungsteile werden dabei geschont und auch ein störendes Nachlaufen des Wassers durch verzögertes Schliessen wird vermieden.

In den abhängigen Ansprüchen sind bevorzugte Ausführungsformen der Erfindung gekennzeichnet.

Anhand der Zeichnungen werden Ausführungsbeispiele der Erfindung näher erläutert. Es zeigen:
- Fig. 1: Eine Geschirr-Waschbrause mit einem von Hand betätigbaren Absperrventil und einer pneumatischen Druckstoss-Dämpfungseinrichtung und
- Fig. 2: eine Geschirr-Waschbrause mit einem von Hand betätigbaren Absperrventil und einer elastischen Druckstoss-Dämpfungseinrichtung.

Die DE-A-36 26 337 offenbart eine zur Integration in übliche Armaturenanschlüsse oder Anschlussstücke von sanitären Absperr- oder Umschaltarmaturen bestimmte Einrichtung zum Dämpfen und Reduzieren von Druckstössen und Druckschlägen in Wasserleitungen. Das Anschlussstück weist ein zum Befestigen an einer Gebäudewand bestimmtes Gehäuse mit einem Kanal auf, an den die Wasserleitung angeschlossen ist. Der Kanal weist eine Erweiterung auf, die durch ein beiderends am Gehäuse befestigtes Schlauchstück durchgriffen ist. Das freie Schlauchstück hat etwa eine Länge, die dem Durchmesser entspricht und in seinem Innern ist ein rohrmantelförmiges Sieb angeordnet, an dem sich das Schlauchstück bei Unterdruck abstützt. Um das Schlauchstück herum begrenzt die Erweiterung einen Gasraum, der mit einem Druck beaufschlagt ist, der etwa in der Grössenordnung des anliegenden Wasserdrucks liegt.

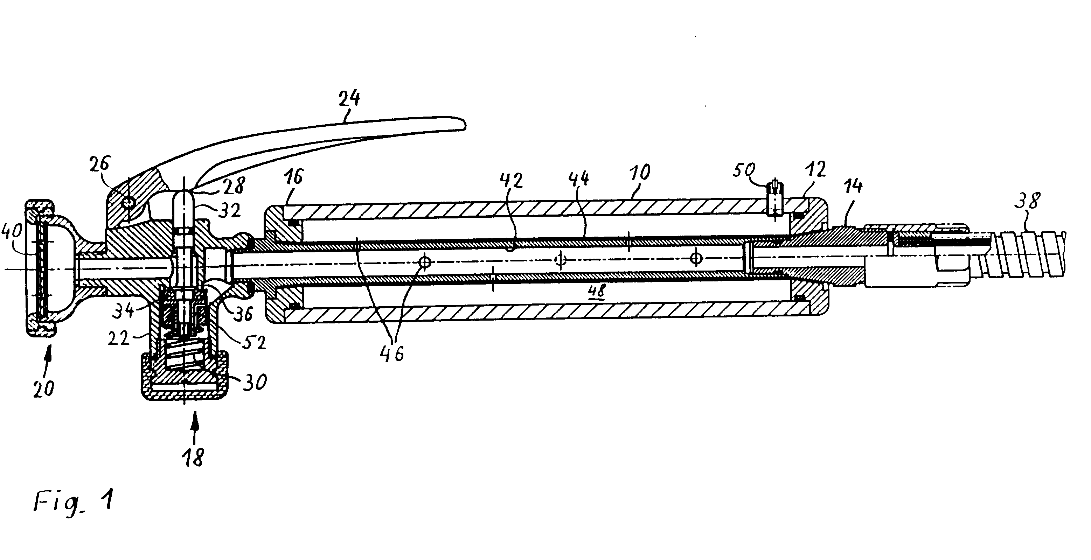

Die in der Fig. 1 dargestellte Geschirr-Waschbrause weist einen rohrförmigen langgestreckten Handgriff **10** auf, der an seinem einlassseitigen Ende **12** einen Anschlussnippel **14** und an seinem auslassseitigen Ende **16** ein Absperrventil **18** mit einem daran befestigten Brausekopf **20** trägt. Am Gehäuse **22** des Absperrventils **18** ist ein Handhebel **24** um eine Schwenkachse **26** schwenkbar befestigt. Der Handhebel **24** drückt mit einer an ihm angeordneten Betätigungsstelle **28** auf einen unter der Kraft einer Rückstellfeder **30** stehenden Ventilstössel **32**.

Beim Niederdrücken des Handhebels **24** in Richtung des Handgriffs **10** wird über den Ventilstössel **32** ein Ventilteller **34** von einem Ventilsitz **36** abgehoben. Damit wird das über einen am Anschlussnippel **14** angeschlossenen Zuleitungsschlauch **38** zugeführte Wasser zum Brausekopf **20** freigegeben, aus dem es durch ein Strahlsieb **40** austritt.

Der Strömungsweg des Wassers führt vom Anschlussnippel **14** zum Absperrventil **18** durch ein koaxial innerhalb des Handgriffs **10** angeordnetes inneres Rohr **42**, über welches ein beiderends abgedichteter gummielastischer Schlauch **44** geschoben ist. Das innere Rohr **42** weist vom Strömungsweg des Wassers in das Innere des Schlauches **44** gerichtete, auf seinen Umfang und über seine Länge verteilt angeordnete Öffnungen **46** auf und erstreckt sich vorzugsweise im wesentlichen über die volle Länge des Handgriffs **10**. Zwischen dem Handgriff **10** und dem Schlauch **44** ist ein koaxialer Hohlraum **48** gebildet. Im Handgriff **10** ist ein von seiner Aussenseite in den Hohlraum **48** mündendes Rückschlagventil **50** angeordnet, an welches ein Nippel einer Druckluftquelle ansetzbar ist, um einen Überdruck im Hohlraum **48** zu erzeugen.

In der vorstehend erläuterten Ausführungsform dient der gummielastische Schlauch **44** als Trennelement zwischen dem im inneren Rohr **42** befindlichen Wasser und dem mit einem kompressiblen Medium, beispielsweise Luft, gefüllten Hohlraum **48**. Die eigene Rückstellkraft des Schlauches **44** ist dabei von untergeordneter Bedeutung, da er lediglich eine Trennfunktion zu erfüllen hat. Die vorstehend beschriebene Ausführungsform wirkt damit als pneumatische Druckstoss-Dämpfungseinrichtung.

Die Dämpfungseinrichtung funktioniert so:
Beträgt der betriebsmässige statische Druck (Staudruck) bei geschlossenem Absperrventil **18** in der Wasserzuleitung beispielsweise 5 bar, dann ist es zweckmässig, den Überdruck im Hohlraum **48** beispielsweise auf 7 bar festzulegen. Durch die Wirkung des Überdrucks in Hohlraum **48** liegt der beim Montieren lose aufgezogene Schlauch **44** am inneren Rohr **42** an.

Durch Niederdrücken des Handhebels **24** wird das Absperrventil **18** geöffnet und durch Loslassen wieder geschlossen. Beim raschen Schliessen unter der Kraft der Rückstellfeder **30** wird die in Bewegung geratene Wassersäule plötzlich abgebremst und verursacht einen Druckanstieg in der Zuleitung vor dem Absperrventil **18**. Übersteigt der momentane Wasserdruck dabei den Druck im Hohlraum, dann drückt das sich im inneren Rohr **42** befindliche Wasser durch die Öffnungen **46** ins Innere des Schlauches **44** und dehnt diesen in den Hohlraum **48** hinein aus. Durch die Ausdehnung des Schlauches **44** wird das Volumen des Strömungsweges zwischen dem einlassseitigen Ende **12** und dem Absperrventil **18** vergrössert und damit der entstehende Druckstoss aufgefangen bzw. verhindert oder zumindest gedämpft.

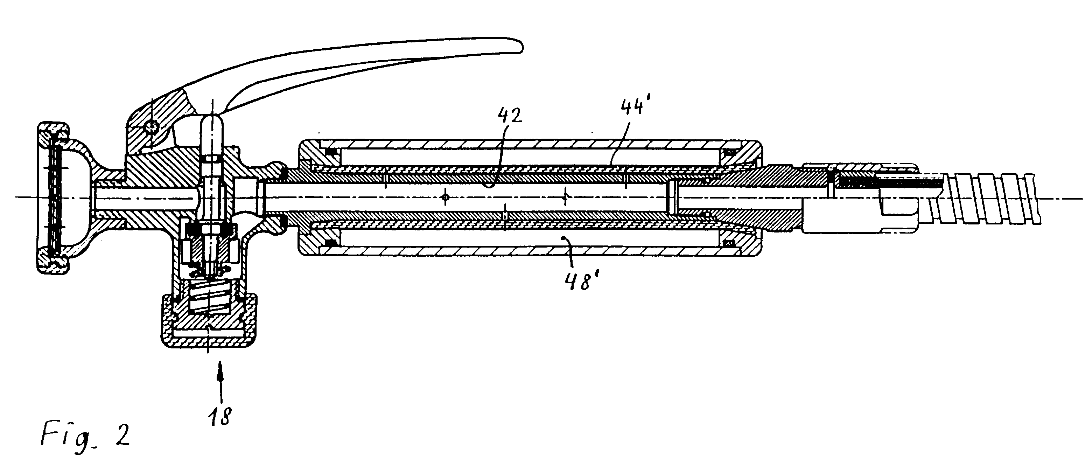

Die Fig. 2 zeigt vergleichsweise eine elastische Druckstoss-Dämpfungseinrichtung. Diese ist im Prinzip ähnlich wie die in der Fig. 1 dargestellte pneumatische Druckstoss-Dämpfungseinrichtung aufgebaut, weist jedoch in ihrem Hohlraum **48'** keinen Überdruck auf. Bei dieser Ausführungsform nach Fig. 2 dient der gummielastische Schlauch **44'** allein zum Auffangen und Ausgleichen eines Druckanstiegs. Er ist deshalb vorzugsweise derart zu bemessen, dass er durch den betriebsmässigen statischen Wasserdruck (Staudruck) vom inneren Rohr **42** in den Hohlraum **48'** hinein abgehoben wird. Beim Öffnen des Absperrventils **18** sinkt der Druck im inneren Rohr **42** infolge der einsetzenden Strömung, wobei sich der Schlauch **44'** dem inneren Rohr **42** nähert.

Die Wirkungsweise der elastischen Druckstoss-Dämpfungseinrichtung unterscheidet sich von derjenigen der pneumatischen Druckstoss-Dämpfungseinrichtung dadurch, dass die Rückstellkraft vom gummielastischen Schlauch **44'** aufgebracht wird und nicht durch einen Überdruck im Hohlraum **48'**.

Als Werkstoff für den Schlauch **44'** dient vorzugsweise ein Elastomere, wobei die Abstimmung auf die Druckverhältnisse durch eine geeignete, zu ermittelnde Wandstärke erzielbar ist. Der Durchmesser des Schlauches **44'** kann derart gewählt werden, dass er sich bei der Montage auf das innere Rohr **42** ohne wesentlichen Widerstand noch aufschieben lässt.

Bei der Ausführungsform nach Fig. 2 herrscht im Hohlraum **48'** der selbe Druck wie in der umgebenden Atmosphäre. Die Luft im Hohlraum **48'** wird bei einem raschen Anstieg des Wasserdrucks vorübergehend leicht komprimiert, wenn sich der Schlauch **44'** ausdehnt.

In den erläuterten Ausführungsbeispielen ist das Absperrventil **18** derart angeordnet, dass sich seine Längsachse rechtwinklig zur Längsachse des Handgriffes **10** erstreckt. Es ist jedoch auch möglich, das Absperrventil koaxial in den Handgriff einzubauen, ohne dadurch die Funktion oder Wirkungsweise der beschriebenen Druckstoss-Dämpfungseinrichtungen zu verändern.

Zusätzlich zu den vorstehend erläuterten Massnahmen zum Verhindern bzw. Abschwächen von Druckstössen ist es auch möglich, einen Dämpfungskolben **52** im Absperrventil **18** vorzusehen, um die Dämpfungswirkung von Druckstössen weiter zu erhöhen.

Beiden Ausführungsformen nach den Figuren 1 und 2 ist gemeinsam, dass die durch die Schläuche **44**, **44'** gebildeten Wandungen in Richtung einer Verkleinerung des Volumens unter einer Vorspannung stehen. Dadurch ist gewährleistet, dass schädliche Druckstösse nicht mehr auftreten können oder zumindest derart abgeschwächt werden, dass kein Risiko für irgendwelche damit beaufschlagten Leitungsteile besteht. Ferner wird damit auch eine durch Druckstösse verursachte Geräuschbelästigung vermieden.

Das in den dargestellten und beschriebenen Ausführungsbeispielen als Absperrorgan erwähnte Absperrventil **18** ist ein Tellerventil. Im Zusammenhang mit der Erfindung können jedoch im wesentlichen alle Arten von Absperrorganen eingesetzt werden, beispielsweise Membranventile, Reiberhähne, Keramikscheiben oder auch Magnetventile.

## Patentansprüche

1. Brause mit einem rohrartigen Handgriff **(10)**, der an seinem einlassseitigen Ende **(12)** Anschlussmittel **(14)** für eine Zuleitung **(38)** und an seinem auslassseitigen Ende **(16)** einen Brausekopf **(20)** und ein Absperrorgan **(18)** trägt, welches Absperrorgan **(18)** an den Handgriff **(10)** angebaut oder in diesen eingebaut und mittels eines Handhebels **(24)** gegen die Kraft einer zum Schliessen bestimmten Rückstellfeder **(30)** betätigbar ist, dadurch gekennzeichnet, dass die Anschlussmittel **(14)** mit dem Absperrorgan **(18)** durch ein den Strömungsweg definierendes, sich koaxial innerhalb des Handgriffs **(10)** erstreckendes inneres Rohr **(42)** strömungsverbunden sind, über welches ein beiderends abgedichteter, eine nachgiebige Wandung zur vorübergehenden Vergrösserung des Volumens bildender, in Richtung einer Verkleinerung des Volumens unter einer Vorspannung stehender Schlauch **(44, 44')** übergestülpt ist, und welches in das Innere des Schlauches **(44, 44')** gerichtete Öffnungen **(46)** aufweist, und dass ein den Schlauch **(44, 44')** umgebender Hohlraum **(48, 48')** zwischen ihm und dem Handgriff **(10)** gebildet ist.

2. Brause nach Anspruch 1, dadurch gekennzeichnet, dass der Schlauch **(44, 44')** aus einem gummielastischen Werkstoff besteht.

3. Brause nach Anspruch 1 oder 2, dadurch gekennzeichnet, dass der Hohlraum **(48)** unter einem Überdruck steht.

4. Brause nach Anspruch 3, dadurch gekennzeichnet, dass der Überdruck im Hohlraum **(48)** grösser als der betriebsmässige statische Wasserdruck, jedoch kleiner als die zu erwartenden Druckspitzen ist.

5. Brause nach Anspruch 3 oder 4, dadurch gekennzeichnet, dass im Handgriff **(10)** ein von seiner Aussenseite in den Hohlraum **(48)** mündendes Rückschlagorgan **(50)** angeordnet ist, welches zum Ansetzen einer Druckluftquelle ausgerüstet ist, um einen Überdruck im Hohlraum **48** zu erzeugen.

6. Brause nach Anspruch 2, dadurch gekennzeichnet, dass der gummielastische Schlauch **(44')** in seiner Festigkeit und/oder Wandstärke derart bemessen ist, dass er durch den betriebsmässigen statischen Wasserdruck vom inneren Rohr **(42)** in den Hohlraum **(48')** hinein ausgedehnt bzw. verdrängt ist und beim Öffnen des Absperrorgans **(18)** infolge des sinkenden Drucks bei durchströmendem Medium mindestens annähernd in seine zylindrische Ruhestellung zurückkehrt.

7. Brause nach einem der Ansprüche 1 bis 6, dadurch gekennzeichnet, dass sich das innere Rohr **(42)** im wesentlichen über die volle Länge des Handgriffs **(10)** erstreckt und die Öffnungen (**46**) auf seinen Umfang und über seine Länge verteilt angeordnet sind.

## Claims

1. Spray with a tubular handle (10) which bears, at its inlet end (12), connection means (14) for a feed line (38) and, at its outlet end (16), a spray head (20) and a shut-off member (18), which shut-off member (18) is fitted on or in the handle (10) and can be actuated, by means of a hand lever (24), counter to the force of a restoring spring (30) intended for closure purposes, characterized in that the connection means (14) are flow-connected to the shut-off member (18) by an inner tube (42) which defines the flow path, extends coaxially within the handle (10), has a hose (44, 44') slipped over it, said hose being sealed at both ends, forming a pliable wall for the temporary increase in volume and being prestressed in the direction of volume reduction, and has openings (46) directed into the interior of the hose (44, 44'), and in that a cavity (48, 48') which encloses the hose (44, 44') is formed between said hose and the handle (10).

2. Spray according to Claim 1, characterized in that the hose (44, 44') consists of an elastomeric material.

3. Spray according to Claim 1 or 2, characterized in that the cavity (48) is under positive pressure.

4. Spray according to Claim 3, characterized in that the positive pressure in the cavity (48) is greater than the operational static water pressure, but smaller than the pressure peaks which are to be expected.

5. Spray according to Claim 3 or 4, characterized in that there is arranged in the handle (10) a non-return member (50) which opens into the cavity (48) from the outside of said handle and is equipped for the attachment of a compressed-air store in order to produce a positive pressure in the cavity (48).

6. Spray according to Claim 2, characterized in that the strength and/or wall thickness of the elastomeric hose (44') is or are such that the hose is expanded or displaced from the inner tube (42) into the cavity (48') by the operational static water pressure and, when the shut-off member (18) is opened, at least virtually returns into its cylindrical rest position on account of the lowering pressure as medium flows through.

7. Spray according to one of Claims 1 to 6, characterized in that the inner tube (42) extends essentially over the entire length of the handle (10), and the openings (46) are distributed over its circumference and over its length.

## Revendications

1. Pomme de douche avec une poignée tubulaire (10), qui porte à son extrémité d'entrée (12) des moyens de raccordement (14) pour une conduite d'arrivée (38) et à son extrémité de sortie (16) un pommeau de douche (20) et un organe d'arrêt (18), organe d'arrêt (18) qui est assemblé à la poignée (10) ou qui est incorporé à celle-ci et qui peut être actionné au moyen d'un levier à main (24) contre la force d'un ressort de rappel (30) destiné à le fermer, caractérisée en ce que les moyens de raccordement (14) sont raccordés, en ce qui concerne l'écoulement, à l'organe d'arrêt (18) par un tube interne (42) définissant un chemin d'écoulement et s'étendant coaxialement à l'intérieur de la poignée (10), sur lequel est enfilé un tuyau souple (44, 44') hermétiquement clos à ses deux extrémités, formant une paroi déformable pour une augmentation temporaire du volume et se trouvant sous une précontrainte dirigée dans le sens d'une diminution du volume, et qui présente des ouvertures (46) dirigées vers l'intérieur du tuyau souple (44, 44'), et en ce qu'un espace creux (48, 48') entourant le tuyau souple (44, 44') est formé entre celui-ci et la poignée (10).

2. Pomme de douche suivant la revendication 1, caractérisée en ce que le tuyau souple (44, 44') est constitué d'une matière en gomme élastique.

3. Pomme de douche suivant la revendication 1 ou 2, caractérisée en ce que l'espace creux (48) se trouve en surpression.

4. Pomme de douche suivant la revendication 3, caractérisée en ce que la surpression dans l'espace creux (48) est plus grande que la pression hydrostatique en régime mais plus petite que les pointes de pression prévisibles.

5. Pomme de douche suivant la revendication 3 ou 4, caractérisée en ce qu'un organe anti-retour (50) est disposé dans la poignée (10) débouchant de son côté extérieur dans l'espace creux (48), qui est équipé pour être raccordé à une source d'air comprimé pour produire une surpression dans l'espace creux (48).

6. Pomme de douche suivant la revendication 2, caractérisée en ce que le tuyau souple (44') en gomme élastique est dimensionné, en ce qui concerne sa résistance et/ou son épaisseur de paroi, de telle façon qu'il se déforme, respectivement qu'il s'écarte du tube interne (42) dans l'espace creux (48') sous la pression hydrostatique en régime et qu'il revienne au moins approximativement dans sa position de repos cylindrique lors de l'ouverture de l'organe d'arrêt (18) à cause de la chute de la pression lorsque le fluide circule.

7. Pomme de douche suivant l'une des revendications 1 à 6, caractérisée en ce que le tube interne (42) s'étend essentiellement sur toute la longueur de la poignée (10) et en ce que les ouvertures (46) sont réparties sur son périmètre et sur sa longueur.
